# EUROPÄISCHE PATENTSCHRIFT

(11) **EP 2 910 412 B1**
(45) Veröffentlichungstag und Bekanntmachung des Hinweises auf die Patenterteilung: **21.08.2019**
(21) Anmeldenummer: 14004419.9
(22) Anmeldetag: 23.12.2014
(51) Int. Cl.: B60N 2/75, B60N 2/68

(54) **Sitz, insbesondere Fahrgastsitz**
Seat, in particular passenger seat
Siège, en particulier siège de véhicule

(30) Priorität: 25.01.2014 DE 102014001017
(43) Veröffentlichungstag der Anmeldung: 26.08.2015
(73) Patentinhaber: MAN Truck & Bus SE, 80995 München (DE)
(72) Erfinder: Scherello, Michael, 81243 München (DE)
(74) Vertreter: v. Bezold & Partner Patentanwälte - PartG mbB

(56) Entgegenhaltungen:
- EP-A1- 0 597 140
- EP-A2- 0 968 916
- WO-A1-2013/003540
- JP-A- 2013 136 321
- US-A- 4 176 878
- US-A- 4 239 282

## Beschreibung

Die Erfindung betrifft einen Sitz, insbesondere einen Fahrgastsitz, mit einer verstellbaren Armlehne.

Aus der Praxis ist es bekannt, einen Fahrgastsitz mit einer verstellbaren Armlehne auszustatten, so dass der Fahrgast die Stellung der Armlehne verändern kann. Beispielsweise ist es bekannt, einen Endbereich der Armlehne drehgelenkig zu lagern, so dass die Armlehne aus einer horizontalen Stellung hochgeklappt werden kann. Hierbei folgt das nicht drehgelenkig gelagerte Ende der Armlehne einer Kreisbahn. Ferner ist es bekannt, mittels einer Verstellvorrichtung, die unterhalb der Sitzfläche an der Tragstruktur des Sitzes angebracht ist, die Armlehne durch eine Schwenkbewegung unter die Sitzfläche zu verschwenken. Nachteile der bekannten Lösungen sind, dass eine Verstellbarkeit der horizontalen Auflagefläche, gemäß Körpergröße und Sitzposition, mehrheitlich nicht gewährleistet ist. Ferner erfordern die genannten Ausführungen aufwändige Konstruktionen. Nach Stand der Technik werden demnach in üblicher Weise separate Armlehnenmodule gefertigt, die nachträglich montiert werden. Hierdurch entstehen sowohl zusätzliche Kosten als auch Gewicht. Ein weiterer Nachteil der aus der Praxis bekannten Lösungen ist, dass sie aufgrund des benötigten Bauraums die Bewegungsfreiheit eines Hintermanns, insbesondere dessen Fußraum, einschränken.

Die US 4 239 282 A offenbart einen Fahrzeugsitz, insbesondere einen Pilotensitz, bei dem an einem seitlichen Bereich des Rückenpolsters ein vertikaler Schlitz eingebracht ist. Entlang dieses Schlitzes ist eine Armlehne zur Höhenverstellung linear verfahrbar.

Ferner ist aus der US 4 176 878 A eine Armlehnenstruktur für einen Fahrzeugsitz, umfassend eine seitlich am Fahrzeugsitz angebrachten Stütze, eine Armlehne und eine Verstellstruktur, die die Stütze mit der Armlehne verbindet. Die Armlehne ist dabei einerseits vertikal beweglich und bildet in der untersten Fahrstellung eine Vergrößerung des Sitzteils des Fahrzeugsitzes und ist andererseits an der Verstellstruktur in eine aufrechte Position schwenkbar.

Es ist somit eine Aufgabe der Erfindung, einen verbesserten Sitz bereitzustellen, mit dem Nachteile herkömmlicher Sitze vermieden werden können. Die Aufgabe der Erfindung ist es insbesondere, einen Sitz, insbesondere einen Fahrgastsitz, mit einer verstellbaren Armlehne bereitzustellen, die auf einfache Art und Weise an dem Sitz montiert werden kann und gleichsam mit einem Mechanismus für eine Höhenverstellung ausgestattet ist. Ferner soll eine möglichst große Bewegungsfreiheit, insbesondere eine verbesserte Beinfreiheit eines Hintermanns, ermöglicht werden.

Diese Aufgaben werden durch einen Sitz gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Sitz, insbesondere ein Fahrgastsitz, vorgeschlagen, mit einer Stützstruktur zur Aufnahme von Kräften, die auf den Sitz einwirken; einer Armlehne; einem Führungselement, das an der Stützstruktur, vorzugsweise an einer Tragstruktur einer Rückenlehne des Sitzes, vorgesehen ist und an dem bzw. auf dem die Armlehne zur Höhenverstellung linear verfahrbar gelagert ist; und einem Feststellmittel, mittels dessen die Armlehne in einer Verfahrposition lösbar arretierbar ist.

Vorzugsweise ist eine horizontale Auflagefläche der Armlehne in unterschiedlichen Höhenpositionen durch lineares Verfahren der Armlehne einstellbar, so dass eine horizontale Auflagefläche unabhängig von der Position der Armlehne bereitgestellt werden kann. Ein Vorzug der Erfindung liegt somit darin, dass eine flexible Höhenverstellung der horizontalen Auflagefläche der Armlehne ermöglicht wird, um die Armlehne an verschiedene Fahrgastgrößen und/oder Sitzpositionen anpassen zu können.

Das Führungselement, das an der Stützstruktur vorgesehen ist bzw. als Teil der Stützstruktur ausgebildet ist oder in diese integriert ist, hat ferner den Vorteil, dass die Armlehnenhalterung funktional in die Tragstruktur des Sitzes integriert ist. Dadurch sind keine separaten Konstruktionsmittel erforderlich, um beispielsweise die Armlehne an den Sitz anzubinden, so dass auf separat tragende Teile oder große Verstellgelenke zur Halterung der Armlehnen der aus dem Stand der Technik bekannten Lösungen verzichtet werden kann. Ferner kann eine verstellbare Armlehne bereitgestellt werden kann, ohne dass ein die Bewegungsfreiheit eines Hintermanns beeinträchtigendes Drehgelenk vonnöten ist.

Gemäß einer bevorzugten Ausgestaltungsform ist ein Schubgelenk vorgesehen, das aus dem Führungselement und einem Endabschnitt der Armlehne, welcher an dem Führungselement verschiebbar gelagert ist, gebildet ist. Mit anderen Worten kann die Armlehne mittels eines Schubgelenks relativ zu einer Tragstruktur des Sitzes bzw. relativ zur Rückenlehne verschiebbar sein.

Das Führungselement kann beispielsweise als Führungsschiene, Laufschiene, Führungsnut oder Wellenführung ausgebildet sein.

Gemäß einem bevorzugten Ausführungsbeispiel erstreckt sich das Führungselement zumindest entlang eines unteren Abschnitts einer Seitenkante der Rückenlehne des Sitzes, so dass die Armlehne in zumindest einem unteren Abschnitt der Rückenlehne relativ zur Rückenlehne linear verfahrbar ist. Hierbei kann das Führungselement an einem Tragelement, das sich entlang einer Seitenkante der Rückenlehne erstreckt, befestigt sein. Im Rahmen der Erfindung besteht ferner die Möglichkeit, dass das Führungselement direkt an einer Seitenkante der Rückenlehne befestigt ist.

Gemäß einer weiteren Variante kann in die Stützstruktur eine Führungsnut eingearbeitet sein, die als das Führungselement dient. Die Stützstruktur kann das vorstehend erwähnte Tragelement umfassen. Eine erfindungsgemäße Realisierung sieht hierbei vor, dass die Stützstruktur als außen liegende Tragstruktur ausgebildet ist, die außerhalb eines Rückenpolsters und/oder eines Sitzpolsters angeordnet ist.

Die Stützstruktur ist dabei als starres Traggestell ausgebildet, umfassend mindestens eine Tragschiene, die sich seitlich entlang der Rückenlehne erstreckt. Das Führungselement ist somit vorteilhafterweise in die mindestens eine Tragschiene integriert und erstreckt sich zumindest entlang eines Abschnitts der Tragschiene in Richtung der Längsachse der Tragschiene erstrecken. Die Tragschiene kann sich auch seitlich entlang eines Sitzteils des Sitzes erstrecken.

Die Tragschiene dient somit als Stützelement zur Aufnahme von Kräften, die auf den Fahrzeugsitz einwirken, sowie als Führungselement für die Armlehne. Beispielsweise kann die mindestens eine Tragschiene eine Führungsnut als Führungselement für die Armlehne aufweisen.

Weiterhin ist die Armlehne durch Verfahren entlang dem Führungselement in einer unteren Position positionierbar, in der eine Armauflagefläche der Armlehne sich entlang einer Seitenfläche eines Sitzteils des Sitzes erstreckt. Dadurch kann die Armlehne in eine Ruheposition gebracht werden, in der sich die Armlehne an die Kontur des Sitzes anpasst und damit keinen zusätzlichen Bauraum beansprucht. Ferner wird dadurch ein komfortables Einsteigen in den und Aussteigen aus dem Sitz ermöglicht.

Gemäß einer weiteren Variante dieser Ausgestaltungsform ist die Armlehne so dimensioniert, dass eine seitliche Kontur der Armlehne in der unteren Position der seitlichen Kontur der Sitzfläche entspricht, so dass die Armlehne in der unteren Position stufenlos an die Sitzfläche angrenzt und eine erweiterte Fläche bereitstellt, die aus der Sitzfläche und der Auflagefläche der Armlehne gebildet wird.

Die Armlehne umfasst ferner einen Trägerarm und eine auf dem Trägerarm befestigte Armauflagefläche. Vorstehend wurde bereits erwähnt, dass sich die mindestens eine Tragschiene seitlich entlang der Rückenlehne und seitlich entlang des Sitzteils des Sitzes erstreckt und dass die Armlehne in die untere (Ruhe-)Position verfahrbar ist. Erfindungsgemäß ist dabei vorgesehen, dass der Trägerarm in der unteren Position der Armlehne von der mindestens einen Tragschiene überdeckt ist, so dass der Trägerarm nicht mehr sichtbar ist.

Die Erfindung ist hinsichtlich des konstruktiven Aufbaus des Feststellmittels nicht auf einen bestimmten Aufbau beschränkt. Zum Arretieren kann das Feststellmittel beispielsweise Rasten, Sicherungsbolzen, Schrauben und/oder eine Klemm- oder Spannvorrichtung aufweisen.

Beispielsweise kann das Feststellmittel einen Bolzen oder Rasthaken umfassen, der in eine erste Stellung bringbar ist, in der die Armlehne an dem Führungselement ortsfest arretiert ist, und der in eine zweite Stellung bringbar ist, in der die Armlehne entlang des Führungselements linear verfahrbar ist.

In Rahmen der Erfindung besteht ferner die Möglichkeit, dass eine Höhenposition der Armlehne entlang dem Führungselement stufenlos verstellbar ist. Beispielsweise kann das Feststellmittel Klemmmittel umfassen, um einen Endbereich der Armlehne, der in dem Führungselement verfahrbar gelagert ist, in einer beliebigen Verfahrposition festzuklemmen. Ferner besteht im Rahmen der Erfindung die Möglichkeit, dass die Armlehne in vorbestimmten Verfahrpositionen arretierbar ist. Gemäß dieser Variante kann das Feststellmittel beispielsweise eine Lochrasterung, die entlang des Führungselements angeordnet ist, und ein an der Armlehne angeordnetes Einrastelement aufweisen, um die Armlehne an vorbestimmten Rasterpositionen zu arretieren.

Eine weitere Variante der Erfindung ist gekennzeichnet durch eine im Wesentlichen unveränderte Ausrichtung einer Armauflagefläche der Armlehne während des Verfahrens der Armlehne entlang des Führungselements. Weiter vorzugsweise bleibt die Armauflagefläche der Armlehne während des Verfahrens der Armlehne entlang des Führungselements im Wesentlichen horizontal ausgerichtet. "Eine im Wesentlichen unveränderte Ausrichtung einer Armauflagefläche" kann in diesem Zusammenhang ein Verkippen der Armlehne von bis zu 10 Grad oder bis zu 20 Grad umfassen, um beispielsweise eine eingerastete Armlehne durch eine Verkippbewegung zu lösen, bevor die Armlehne entlang des Führungselements verfahren wird.

Vorzugsweise ist das Führungselement verblendet. Diese Ausführungsvariante reduziert das Risiko, dass ein Finger oder ein Kleidungsstück beim Verfahren der Armlehne eingeklemmt wird.

Die Erfindung ist hinsichtlich des konstruktiven Aufbaus des Sitzes nicht auf einen bestimmten Aufbau oder Sitztyp beschränkt. Eine hervorgehobene Anwendung betrifft einen Fahrgastsitz, insbesondere für Busse. Der Sitz mit der verstellbaren Armlehne kann ferner auch als ein Sitz für den Einsatz in Flugzeugen oder in Zügen ausgebildet sein. Bei einem Fahrgastsitz kann die Armlehne als Gegenarmlehne, Mittenarmlehne und/oder als Wandarmlehne ausgebildet sein.

Vorzugsweise umfasst der Sitz ein Sitzteil, umfassend einen Sitzpolsterträger und ein Sitzpolster, das auf dem Sitzpolsterträger starr angeordnet ist. Die Rückenlehne umfasst vorzugsweise einen Rückenpolsterträger und ein Rückenpolster, das auf dem Rückenpolsterträger starr angeordnet ist.

Es wurde vorstehend bereits erwähnt, dass das Führungselement an einer Stützstruktur des Sitzes angeordnet sein kann, insbesondere an einer Stützstruktur, die als starres Traggestell außerhalb des Sitzteils und der Rückenlehne angeordnet ist und mit dem Sitzpolsterträger und dem Rückenpolsterträger in Verbindung steht. Mit anderen Worten kann das Traggestell außerhalb des Sitzpolsterträgers, des Sitzpolsters, des Rückenpolsterträgers und des Rückenpolsters angeordnet sein.

Gemäß einer besonders vorteilhaften Variante dieser Ausführungsform umfasst das starre Traggestell paarweise angeordnete Tragschienen, die sich entlang gegenüberliegender Seitenkanten des Sitzteils und der Rückenlehne erstrecken, wobei mindestens eine der Tragschienen das Führungselement zur Lagerung der Armlehne umfasst. Gemäß einer Variante dieser Ausführungsform weist mindestens eine der Tragschienen eine Führungsnut auf, die sich entlang der Längsachse der Tragschiene erstreckt und in der die Armlehne verschiebbar gelagert ist.

Die Erfindung betrifft ferner ein Fahrzeug, insbesondere einen Omnibus, mit einem Sitz nach einem der vorstehend beschriebenen Aspekte. Hierbei ist zu erwähnen, dass der Sitz für den Einbau in unterschiedliche Fahrzeuge im Sinne von mobilen Verkehrsmitteln, wie beispielsweise allgemein Nutzfahrzeuge, Personenkraftwagen, Flugzeuge, Züge, Schiffe etc. geeignet ist.

Weitere Einzelheiten und Vorteile der Erfindung werden im Folgenden unter Bezug auf die beigefügten Zeichnungen beschrieben. Es zeigen:
- Figur 1: eine perspektivische Ansicht eines Sitzes mit der Armlehne in einer ersten Stellung gemäß einem Ausführungsbeispiel;
- Figur 2: eine Seitenansicht des Sitzes aus Figur 1;
- Figur 3: eine perspektivische Ansicht eines Sitzes mit der Armlehne in einer unteren Stellung gemäß einem Ausführungsbeispiel;
- Figur 4: eine Seitenansicht des Sitzes aus Figur 3; und
- Figur 5: eine Explosionsdarstellung des Sitzes.

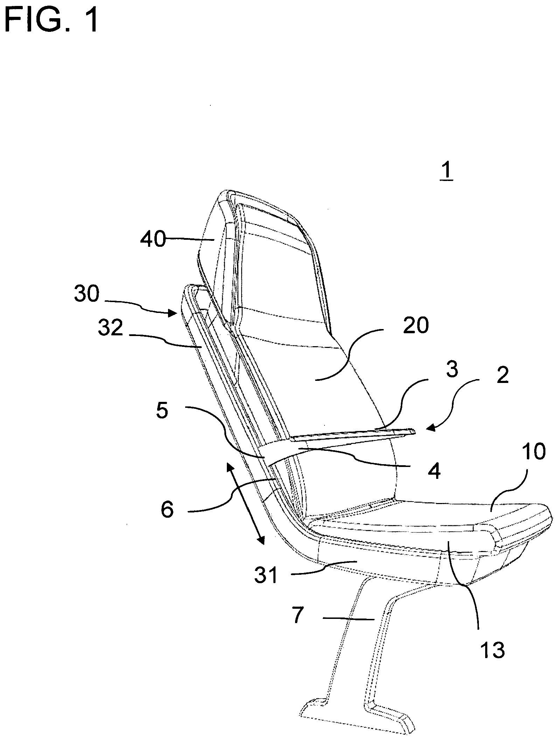

Figur 1 zeigt beispielhaft einen Fahrgastsitz 1 mit einer verstellbaren Armlehne 2 gemäß einem Ausführungsbeispiel der Erfindung.

Die Sitz-Tragstruktur ist als starres Traggestell 30 ausgebildet, das außerhalb eines Sitzteils 10 des Sitzes 1 und außerhalb der Rückenlehne 20 umfangseitig angeordnet ist. Das Traggestell 30 weist insbesondere paarweise angeordnete Tragschienen 31 auf, die sich entlang gegenüberliegender Seitenkanten 13 des Sitzteils 10 erstrecken. Die Tragschienen 31 sind auf einem Standfuß 7 befestigt. Ferner umfasst das Traggestell 30 paarweise angeordnete Tragschienen 32, die sich entlang gegenüberliegender Seitenkanten 23 der Rückenlehne 20 erstrecken.

Die Armlehne 2 ist mittels eines Schubgelenks relativ zur Rückenlehne 20 bzw. relativ zu einer Stützstruktur 30 höhenverstellbar. Ein besonderer Vorzug der dargestellten Ausführungsform liegt darin, dass das vorgesehene Schubgelenk in die Sitz-Tragstruktur integriert ist. Hierzu ist eine Führungsnut 6 vorgesehen, die an einer Oberseite der Tragschiene 32, die sich seitlich entlang der Rückenlehne 20 erstreckt, angeordnet ist und entlang einer Längsachse der Tragschiene 32 verläuft.

Weitere Ausführungsformen, die nicht dargestellt sind, weisen eine Positionierung der Führungsnut auf der Innen-, Rück- oder Außenseite der Tragschiene 32 auf.

Die Armlehne 2 umfasst einen Trägerarm 4 und eine auf dem Trägerarm 4 befestigte Armauflagefläche 3. Ein Endabschnitt 5 des Trägerarms 4 ist in der Führungsnut 6 verschiebbar gelagert. Um zu vermeiden, dass der Endabschnitt 5 aus der Führungsnut 6 herausgezogen werden kann, kann dieser T-förmig ausgebildet sein. Das Schubgelenk wird somit aus der Führungsnut 6 und dem Endabschnitt 5 gebildet. Die Führungsnut kann sich entlang der gesamten Länge der Tragschiene 32 erstrecken oder nur entlang eines unteren Abschnitts der Tragschiene 32, so dass die Armlehne 2 zumindest in einem unteren Abschnitt der Rückenlehne 20 höhenverstellbar ist.

Ferner ist ein Feststellmittel (nicht dargestellt) vorgesehen, mittels dessen die Armlehne 2 in einer Verfahrposition entlang der Führungsnut lösbar arretierbar ist.

Vorstehend wurde bereits erwähnt, dass der konstruktive Aufbau des Feststellmittels nicht auf einen bestimmten Aufbau beschränkt ist. Zum Arretieren kann ein an sich aus dem Stand der Technik bekanntes Feststellmittel verwendet werden, beispielsweise Rasten, Sicherungsbolzen, Schrauben und/oder eine Klemm- oder Spannvorrichtung. Im vorliegenden Ausführungsbeispiel ist an der Innenseite der Führungsnut 6 eine Lochrasterung angeordnet und am Endbereich 5 der Armlehne ein Bolzen (nicht gezeigt), der mit einem Loch der Lochrasterung in Eingriff gebracht werden kann. Am vorderen Ende der Armlehne, d. h. an dem von der Führungsnut 6 abgewandten Ende, ist ein kleiner Betätigungshebel (nicht gezeigt) vorgesehen, mittels dessen der Bolzen von einem Fahrgast entriegelt werden kann.

In der entriegelten Stellung des Bolzens, d. h. in der nicht arretierten Stellung der Armlehne 2, ist die Armlehne 2 linear entlang der Führungsnut 6 verfahrbar. In der verriegelten Stellung ist die Armlehne an der Führungsnut 6 arretiert.

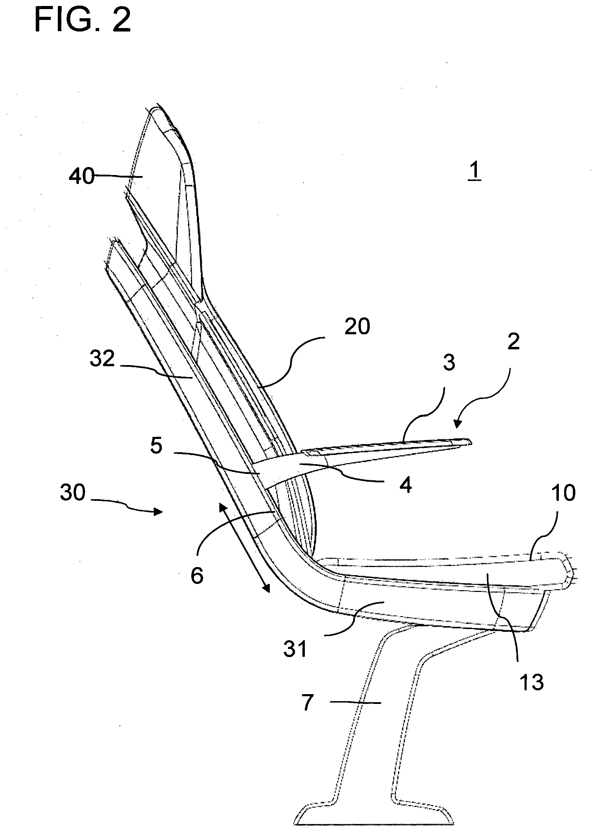

Figur 2 zeigt den Sitz aus Figur 1 nochmals in einer Seitendarstellung.

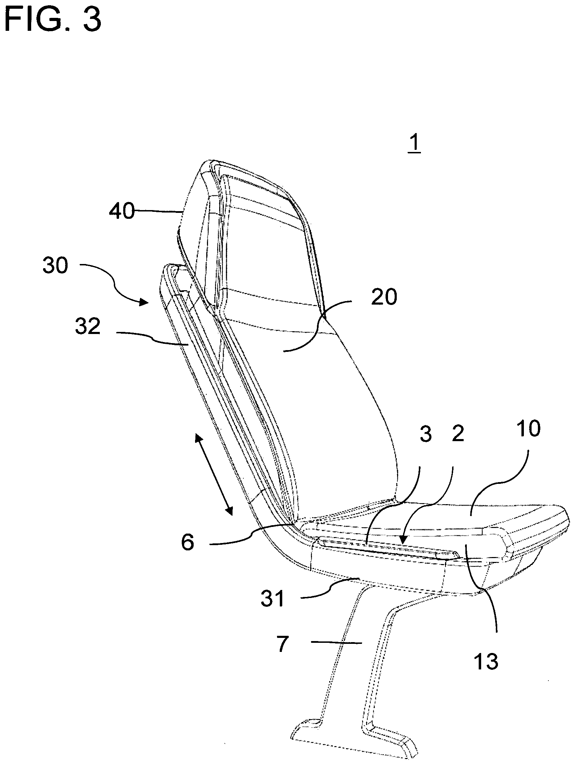

Figur 3 zeigt eine perspektivische Ansicht des Sitzes mit der Armlehne 2 in einer unteren Ruheposition. Durch Verfahren der Armlehne 2 entlang der Führungsnut 6 kann die Armlehne 2 in einer unteren Position positioniert werden, in der die Armauflagefläche 3 der Armlehne 2 sich entlang der Seitenfläche 13 des Sitzteils 10 des Sitzes 1 erstreckt. In dieser Ruheposition passt sich die Armlehne 2 an die Kontur des Sitzes an und beansprucht damit keinen zusätzlichen Bauraum. Ferner ist der Trägerarm 4 in der unteren Position von der Tragschiene 31, die sich seitlich entlang des Sitzteils 10 erstreckt, überdeckt, so dass der Trägerarm 4 in dieser Stellung nicht mehr sichtbar ist.

Eine weitere, nicht dargestellte Ausführungsform beinhaltet eine Ausführung der Armauflagefläche, die in der unteren Position der seitlichen Kontur der Sitzfläche entspricht. Gemäß dieser Ausführungsvariante grenzt die Armauflagefläche in der unteren Position stufenlos an die Sitzfläche an. Hierdurch wird eine erweiterte Fläche bereitgestellt, bestehend aus Sitzfläche und mindestens einer Armlehne.

Aus der Figur 3 ist ferner ersichtlich, dass die räumliche Ausrichtung der Armlehne 2 in der unteren Position die gleiche ist wie in der Armauflageposition, die in den Figuren 1 und 2 gezeigt ist. Dies liegt daran, dass eine im Wesentlichen horizontale Ausrichtung der Armauflagefläche 3 der Armlehne 2 bei der Verschiebung der Armlehne 2 entlang des Führungselements 6 gleich bleibt.

Die Armlehne 2 kann an einer Seite oder an beiden Seiten eines Sitzes angeordnet sein.

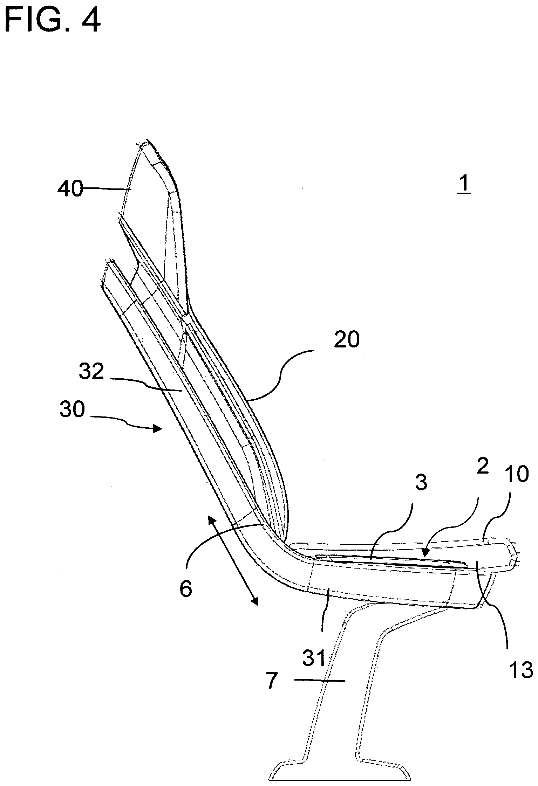

Figur 4 zeigt den Sitz aus Figur 3 nochmals in einer Seitendarstellung.

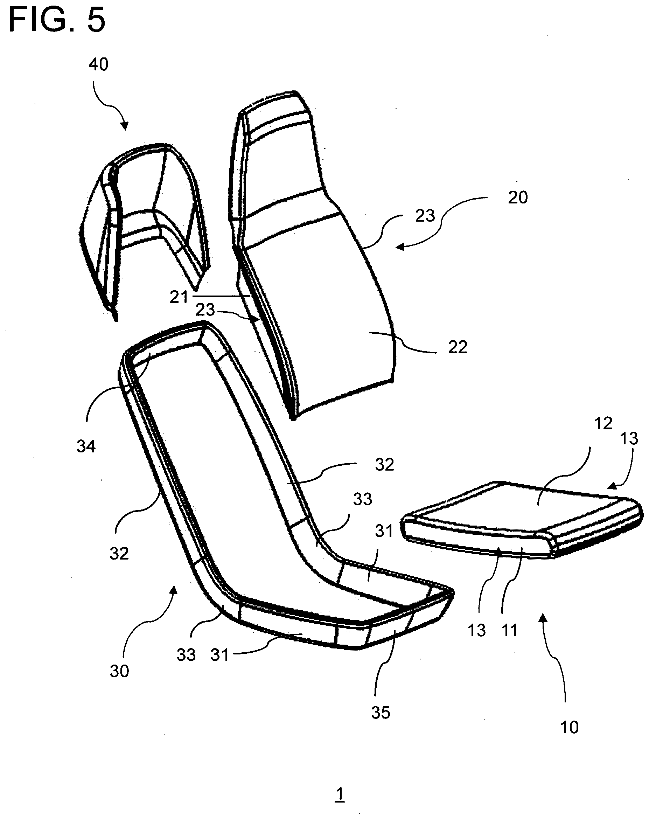

Figur 5 zeigt eine Explosionsdarstellung eines Ausführungsbeispiels des Sitzes. In der Darstellung der Figur 5 ist die Armlehne 2 nicht dargestellt, um das Konstruktionsprinzip des Sitzes, insbesondere des Traggestells 30, zu verdeutlichen. Die Fahrgastsitzfläche wird durch ein Sitzteil 10 und durch eine Rückenlehne 20 gebildet. Das Sitzteil 10 weist ein Sitzpolster 12 auf, das auf einem Sitzpolsterträger 11 starr befestigt ist. Ebenso umfasst die Rückenlehne 20 ein Rückenpolster 22, das auf einem Rückenpolsterträger 21 befestigt ist. Zur Aufnahme und Fixierung des Sitzpolsters 12 und des Rückenpolsters 22 weisen die Polsterträger 11, 21 aus dem Stand der Technik bekannte Befestigungselemente (nicht gezeigt) auf, beispielsweise Klammern, Schnapphaken oder Befestigungsclips. Das Sitzteil 10 und die Rückenlehne 20 sind mehrteilig bzw. mehrlagig ausgebildet und enthalten beispielsweise jeweils eine Federmatte und sind mit einem Polsterüberzug versehen.

Im Gegensatz zu den aus dem Stand der Technik bekannten Fahrgastsitzen ist es nicht unbedingt erforderlich, in das Sitzteil und die Rückenlehne weitere Rahmenkonstruktionen, beispielsweise in Form eines Stahlgerüsts, einzuarbeiten, um als Stützstruktur die auf den Fahrzeugsitz 1 einwirkenden Kräfte aufnehmen zu können. Stattdessen weist der Fahrzeugsitz 1 ein starres Traggestell 30 auf, das außerhalb des Sitzteils 10 und außerhalb der Rückenlehne 20 umfangseitig angeordnet ist und das mit dem Sitzpolsterträger 11 und dem Rückenpolsterträger 21 in Verbindung steht. Das Traggestell 30 ist somit sichtbar und wird nicht durch Polsterelemente oder durch den Polsterüberzug verdeckt. Dennoch kann es auch bei Verwendung des erfindungsgemäßen Traggestells vorteilhaft sein, in der Rückenlehne oder im Sitzteil zusätzliche Stützelemente einzubringen, insbesondere in Teilbereichen der Schubgelenkaufnahme oder im Kniebereich des Hintermanns.

Im vorliegenden Ausführungsbeispiel ist das Traggestell 30 als geschlossenes Rahmengestell ausgebildet, das das Sitzteil und die Rückenlehne 20 umfangseitig umschließt. Hierbei besteht das Traggestell 30 aus umlaufenden Tragschienen 31, 32, 33, 34, 35, die aus einem Aluminiumhohlprofil hergestellt sind. Das Traggestell 30 kann hierbei einteilig durch ein Streck-Biege-Verfahren hergestellt sein. Das Traggestell 30 weist paarweise angeordnete Tragschienen 31 auf, die sich entlang gegenüberliegender Seitenkanten 13 des Sitzteils 10, insbesondere des Sitzpolsterträgers 11, erstrecken. Ferner umfasst das Traggestell 30 paarweise angeordnete Tragschienen 32, die sich entlang gegenüberliegender Seitenkanten 23 der Rückenlehne 20, insbesondere des Rückenlehnenpolsterträgers 21, erstrecken. Die Tragschienen 31 sind mit den Tragschienen 32 über starre, gekrümmte Verbindungsschienen 33 verbunden. Der Öffnungswinkel zwischen den horizontalen Tragschienen 31 und den schräg nach oben geneigten Tragschienen 32 beträgt circa 110 Grad. Je nach gewünschter Sitzform können auch andere Öffnungswinkel durch entsprechende Biegung oder Formung des Traggestells 30 hergestellt werden. Das Traggestell 30 ist starr und weist somit keine Drehgelenke auf. Wie in den Figuren 1 bis 4 gezeigt, weisen die Tragschienen 31 und 33 an ihrer Oberkannte die Führungsnut 6 auf, in der die Armlehne verschiebbar geführt ist (in Figur 5 nicht dargestellt).

Obwohl die Erfindung unter Bezugnahme auf bestimmte Ausführungsbeispiele beschrieben worden ist, ist eine Vielzahl von Varianten und Abwandlungen möglich, solange der resultierende Gegenstand zum Schutzbereich gehört, der durch die beigefügten Patentansprüche definiert ist. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Fahrgastsitz
- 2: Armlehne
- 3: Trägerarm der Armlehne
- 4: Armauflagefläche
- 5: Endbereich des Trägerarms
- 6: Führungselement, z. B. Führungsnut
- 7: Standfuß
- 10: Sitzteil
- 11: Sitzpolsterträger
- 12: Sitzpolster
- 13: Seitenkante des Sitzpolsters
- 20: Rückenlehne
- 21: Rückenpolsterträger
- 22: Rückenpolster
- 23: Seitenkante des Rückenpolsterträgers
- 30: Traggestell
- 31-35: Tragschienen des Traggestells
- 40: Kopfstütze

## Patentansprüche

1. Sitz, insbesondere Fahrgastsitz (1), mit
- einer Stützstruktur zur Aufnahme von Kräften, die auf den Sitz einwirken;
- einer Armlehne (2), umfassend einen Trägerarm (4) und eine auf dem Trägerarm (4) befestigte Armauflagefläche (3);
- einem Führungselement (6), das an der Stützstruktur vorgesehen ist und an dem die Armlehne (2) zur Höhenverstellung linear verfahrbar gelagert ist; und
- einem Feststellmittel, mittels dessen die Armlehne (2) in einer Verfahrposition lösbar arretierbar ist,
wobei die Stützstruktur als außen liegende Tragstruktur ausgebildet ist, die außerhalb eines Rückenpolsters (20) und/oder eines Sitzpolsters (12) angeordnet ist;
wobei die Stützstruktur als starres Traggestell (30) ausgebildet ist, umfassend mindestens eine Tragschiene (31, 32), die sich seitlich entlang der Rückenlehne (20) erstreckt;
wobei die Armlehne (2) in einer unteren Position positionierbar ist, in der eine Armauflagefläche (3) der Armlehne (2) sich entlang einer Seitenfläche (13) eines Sitzteils (10) des Sitzes erstreckt;
**dadurch gekennzeichnet, dass** sich die Tragschiene (31, 32) seitlich entlang eines Sitzteils (10) des Sitzes erstreckt und dass der Trägerarm (4) in der unteren Position von der mindestens einen Tragschiene (31, 32) überdeckt ist, so dass der Trägerarm (4) nicht mehr sichtbar ist.

2. Sitz nach Anspruch 1, **gekennzeichnet durch** ein Schubgelenk, das aus dem Führungselement (6) und einem Endabschnitt (5) der Armlehne (2), welcher an dem Führungselement (6) verschiebbar gelagert ist, gebildet ist.

3. Sitz nach Anspruch 1 oder 2, **dadurch gekennzeichnet, dass** sich das Führungselement (6) zumindest entlang eines unteren Abschnitts einer Seitenkante (23) einer Rückenlehne (20) des Sitzes erstreckt.

4. Sitz nach einem der vorhergehenden Ansprüche, **dadurch gekennzeichnet,**
a) **dass** in die Stützstruktur eine Führungsnut eingearbeitet ist, die als das Führungselement (6) dient; und/oder
b) **dass** das Führungselement (6) an einer Tragstruktur einer Rückenlehne (20) des Sitzes vorgesehen ist.

5. Sitz nach Anspruch 1, **dadurch gekennzeichnet, dass** die mindestens eine Tragschiene (31, 32) eine Führungsnut (6) umfasst, die als das Führungselement (6) dient.

6. Sitz nach einem der vorhergehenden Ansprüche, **dadurch gekennzeichnet,**
a) **dass** eine Höhenposition der Armlehne (2) entlang dem Führungselement (6) stufenlos verstellbar ist; oder
b) **dass** das Führungselement (6) eine Lochrasterung aufweist und die Armlehne (2) an vorbestimmten Rasterpositionen anordenbar ist.

7. Sitz nach einem der vorhergehenden Ansprüche, **gekennzeichnet durch** eine im Wesentlichen horizontale Ausrichtung einer Armauflagefläche (3) der Armlehne (2) bei der Verschiebung der Armlehne (2) entlang des Führungselements (6).

8. Sitz nach einem der vorhergehenden Ansprüche, **dadurch gekennzeichnet, dass** das Führungselement (6) verblendet ist.

9. Sitz nach einem der vorhergehenden Ansprüche, **dadurch gekennzeichnet, dass** das Feststellmittel einen Bolzen oder einen Rasthaken umfasst, der in eine erste Stellung bringbar ist, in der die Armlehne (2) an dem Führungselement (6) ortsfest arretiert ist, und der in eine zweite Stellung bringbar ist, in der die Armlehne (2) entlang des Führungselements (6) linear verfahrbar ist.

10. Sitz nach Anspruch 1 oder einem der Ansprüche 5 bis 9, **gekennzeichnet durch:**
a) ein Sitzteil (10), umfassend einen Sitzpolsterträger (11) und ein Sitzpolster (12), das auf dem Sitzpolsterträger (11) starr angeordnet ist;
b) die Rückenlehne (20), umfassend einen Rückenpolsterträger (21) und ein Rückenpolster (22), das auf dem Rückenpolsterträger (21) starr angeordnet ist; wobei
c) das starre Traggestell (30) außerhalb des Sitzteils (10) und der Rückenlehne (20) angeordnet ist und mit dem Sitzpolsterträger (11) und dem Rückenpolsterträger (21) in Verbindung steht und paarweise angeordnete Tragschienen (31, 32) aufweist, die sich entlang gegenüberliegender Seitenkanten (13, 23) des Sitzteils und der Rückenlehne (20) erstrecken.

11. Fahrzeug, insbesondere Omnibus, mit einem Sitz nach einem der vorhergehenden Ansprüche.

## Claims

1. A seat, in particular a passenger seat (1), having
- a support structure for absorbing forces which act on the seat;
- an armrest (2), comprising a carrier arm (4) and an arm support face (3) which is secured to the carrier arm (4);
- a guiding element (6) which is provided on the support structure and on which the armrest (2) is supported so as to be able to be linearly displaced for vertical adjustment; and
- a fixing means by means of which the armrest (2) can be releasably secured in a displacement position, wherein the seat structure is constructed as an outer carrier structure which is arranged outside a rear cushion (20) and/or a seat cushion (12);
wherein the support structure is constructed as a rigid carrier frame (30) comprising at least one carrier rail (31, 32) which extends laterally along the backrest (20); wherein the armrest (2) can be positioned in a lower position in which an arm support face (3) of the armrest (2) extends along a side face (13) of a seat member (10) of the seat; **characterized in that** the carrier rail (31, 32) extends laterally along a seat member (10) of the seat and **in that** the carrier arm (4) in the lower position is covered by the at least one carrier rail (31, 32) so that the carrier arm (4) is no longer visible.

2. The seat according to Claim 1, **characterized by** a prismatic joint which is formed by the guiding element (6) and an end portion (5) of the armrest (2) which is displaceably supported on the guiding element (6).

3. The seat according to Claim 1 or Claim 2, **characterized in that** the guiding element (6) extends at least along a lower portion of a lateral edge (23) of a backrest (20) of the seat.

4. The seat according to any one of the preceding claims, **characterized in that**
a) there is incorporated in the support structure a guiding groove which acts as the guiding element (6); and/or
b) **in that** the guiding element (6) is provided on a carrier structure of a backrest (20) of the seat.

5. The seat according to Claim 1, **characterized in that** the at least one carrier rail (31, 32) comprises a guiding groove (6) which acts as the guiding element (6).

6. The seat according to any one of the preceding claims, **characterized in that**
a) a vertical position of the armrest (2) can be adjusted in a stepless manner along the guiding element (6); or
b) **in that** the guiding element (6) has a perforated grid and the armrest (2) can be arranged at predetermined grid positions.

7. The seat according to any one of the preceding claims, **characterized by** a substantially horizontal orientation of an arm support face (3) of the armrest (2) when the armrest (2) is displaced along the guiding element (6).

8. The seat according to any one of the preceding claims, **characterized in that** the guiding element (6) is screened.

9. The seat according to any one of the preceding claims, **characterized in that** the fixing means comprises a pin or a catch hook which can be moved into a first position, in which the armrest (2) is secured on the guiding element (6) in a fixed manner, and which can be moved into a second position, in which the armrest (2) can be moved in a linear manner along the guiding element (6).

10. The seat according to Claim 1 or any one of Claims 5 to 9, **characterized by:**
a) a seat member (10) comprising a seat cushion carrier (11) and a seat cushion (12) which is arranged in a rigid manner on the seat cushion carrier (11);
b) the backrest (20) comprising a rear cushion carrier (21) and a rear cushion (22) which is arranged in a rigid manner on the rear cushion carrier (21); wherein
c) the rigid carrier frame (30) is arranged outside the seat member (10) and the backrest (20) and is connected to the seat cushion carrier (11) and the rear cushion carrier (21) and has carrier rails (31, 32) which are arranged in pairs and which extend along opposing lateral edges (13, 23) of the seat member and the backrest (20).

11. A vehicle, in particular a bus, having a seat according to any one of the preceding claims.

## Revendications

1. Siège, en particulier siège de passager (1), comprenant
- une structure de support pour recevoir des forces qui agissent sur le siège ;
- un accoudoir (2) comprenant un bras de support (4) et une surface d'appui du bras (3) fixée au bras de support (4) ;
- un élément de guidage (6) qui est prévu au niveau de la structure de support et sur lequel l'accoudoir (2) est supporté de manière déplaçable linéairement en vue d'un réglage en hauteur ; et
- un moyen de blocage au moyen duquel l'accoudoir (2) peut être bloqué de manière déblocable dans une position de déplacement,
la structure de support étant réalisée sous la forme d'une structure porteuse située à l'extérieur, qui est disposée à l'extérieur d'un rembourrage de dossier (20) et/ou d'un rembourrage de siège (12) ;
la structure de support étant réalisée sous forme de bâti porteur rigide (30) comprenant au moins un rail porteur (31, 32) qui s'étend latéralement le long du dossier (20) ;
l'accoudoir (2) pouvant être positionné dans une position inférieure dans laquelle une surface d'appui du bras (3) de l'accoudoir (2) s'étend le long d'une surface latérale (13) d'une partie de siège (10) du siège ;
**caractérisé en ce que** le rail porteur (31, 32) s'étend latéralement le long d'une partie de siège (10) du siège et **en ce que** le bras de support (4), dans la position inférieure, est recouvert par l'au moins un rail porteur (31, 32) de telle sorte que le bras de support (4) ne soit plus visible.

2. Siège selon la revendication 1, **caractérisé par** une glissière qui est formée à partir de l'élément de guidage (6) et d'une portion d'extrémité (5) de l'accoudoir (2) qui est supportée de manière déplaçable sur l'élément de guidage (6).

3. Siège selon la revendication 1 ou 2, **caractérisé en ce que** l'élément de guidage (6) s'étend au moins le long d'une portion inférieure d'une arête latérale (23) d'un dossier (20) du siège.

4. Siège selon l'une quelconque des revendications précédentes, **caractérisé en ce que**
a) une rainure de guidage qui sert d'élément de guidage (6) est incorporée dans la structure de support; et/ou
b) l'élément de guidage (6) est prévu au niveau d'une structure porteuse d'un dossier (20) du siège.

5. Siège selon la revendication 1, **caractérisé en ce que** l'au moins un rail porteur (31, 32) comprend une rainure de guidage (6) qui sert d'élément de guidage (6).

6. Siège selon l'une quelconque des revendications précédentes, **caractérisé en ce que**
a) une position en hauteur de l'accoudoir (2) le long de l'élément de guidage (6) peut être réglée en continu ; ou
b) l'élément de guidage (6) présente une trame de trous et l'accoudoir (2) peut être disposé à des emplacements prédéterminés sur la trame.

7. Siège selon l'une quelconque des revendications précédentes, **caractérisé par** une orientation essentiellement horizontale d'une surface d'appui du bras (3) de l'accoudoir (2) lors du déplacement de l'accoudoir (2) le long de l'élément de guidage (6) .

8. Siège selon l'une quelconque des revendications précédentes, **caractérisé en ce que** l'élément de guidage (6) est revêtu.

9. Siège selon l'une quelconque des revendications précédentes, **caractérisé en ce que** le moyen de blocage comprend un boulon ou un crochet d'encliquetage qui peut être amené dans une première position dans laquelle l'accoudoir (2) est bloqué fixement sur l'élément de guidage (6) et qui peut être amené dans une deuxième position dans laquelle l'accoudoir (2) peut être déplacé linéairement le long de l'élément de guidage (6).

10. Siège selon la revendication 1 ou selon l'une quelconque des revendications 5 à 9, **caractérisé par :**
a) une partie de siège (10), comprenant un support de rembourrage de siège (11) et un rembourrage de siège (12) qui est disposé rigidement sur le support de rembourrage de siège (11) ;
b) le dossier (20), comprenant un support de rembourrage de dossier (21) et un rembourrage de dossier (22) qui est disposé rigidement sur le support de rembourrage de dossier (21) ;
c) le bâti porteur rigide (30) étant disposé à l'extérieur de la partie de siège (10) et du dossier (20) et étant en liaison avec le support de rembourrage de siège (11) et le support de rembourrage de dossier (21) et présentant des rails porteurs (31, 32) disposés par paires qui s'étendent le long d'arêtes latérales opposées (13, 23) de la partie de siège et du dossier (20).

11. Véhicule, en particulier omnibus comprenant un siège selon l'une quelconque des revendications précédentes.
